(19) Europäisches Patentamt

European Patent Office

Office européen des brevets

(11) Numéro de publication : **0 028 970**
**B1**

# FASCICULE DE BREVET EUROPÉEN

(12)

(45) Date de publication du fascicule du brevet :
**11.04.84**

(21) Numéro de dépôt : **80401563.4**

(22) Date de dépôt : **03.11.80**

(51) Int. Cl.³ : **F 02 C 7/20**, B 64 D 29/06

---

(54) **Dispositif de fixation de turboréacteurs multiflux.**

---

(30) Priorité : **12.11.79 FR 7927771**

(43) Date de publication de la demande :
**20.05.81 Bulletin 81/20**

(45) Mention de la délivrance du brevet :
**11.04.84 Bulletin 84/15**

(84) Etats contractants désignés :
**DE FR GB IT SE**

(56) Documents cités :
**DE-C- 961 151**
**FR-A- 1 198 215**
**FR-A- 2 102 187**
**US-A- 2 936 999**
**US-A- 3 327 965**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Joubert, Raymond Jean Maurice**
**1, Allée Gustave Courbet Domaine de Grand Vau**
**F-91600 Savigny sur Orge (FR)**
Inventeur : **Bouiller, Jean Georges**
**10, rue Kleber**
**F-91800 Brunoy (FR)**

(74) Mandataire : **Molnat, François et al**
**S.N.E.C.M.A. Service des Brevets Boîte Postale 81**
**F-91003 Evry Cedex (FR)**

## Dispositif de fixation de turboréacteurs multiflux

L'invention est relative à un dispositif de fixation, à une structure porteuse rigide liée à un aéronef, du carter d'échappement de la turbine d'un turboréacteur à au moins deux flux, à savoir un flux primaire central délimité par ce carter d'échappement et un flux secondaire délimité par une première enveloppe qui entoure ce carter et qui est fixée à cette structure porteuse. Ce dispositif est du genre comprenant une pluralité d'organes de liaison répartis autour du carter d'échappement. Chacun de ces organes est constitué par un bras dont la section est profilée de manière convenable pour répondre à l'écoulement du flux.

Chaque organe de liaison est évidemment muni de premiers moyens d'attache à la première enveloppe de flux secondaire et de deuxièmes moyens d'attache au carter d'échappement. Il en résulte :

— que l'enveloppe du flux secondaire est liée rigidement à la structure porteuse,

— que le carter d'échappement est lié rigidement à l'enveloppe du flux secondaire,

— et que le palier arrière est lié rigidement au carter d'échappement.

Cette rigidité des différentes liaisons en jeu fait que, lorsqu'un balourd accidentel important apparaît en cours de fonctionnement (balourd dû par exemple à la perte d'une aube mobile), le carter d'échappement est soumis à la fois aux sollicitations radiales cycliques exercées par le palier et aux réactions de l'ensemble rigide et de grande inertie constitué par l'enveloppe de flux secondaire et la structure porteuse. L'enveloppe du stator de la turbine, à laquelle appartient le carter d'échappement, subit ainsi des déformations cycliques. D'autre part, des erreurs dimensionnelles de réalisation — qui sont inévitables quelles que soient les précautions prises lors des opérations de chaudronnerie et d'usinage et qui sont d'autant plus importantes que les dimensions transversales du turboréacteur sont grandes — provoquent au cours du montage du carter d'échappement dans l'enveloppe du flux secondaire des déformations qui affectent inévitablement le stator.

Ces causes de déformations permanentes imposent de prévoir entre rotor et stator un jeu radial notable qui est préjudiciable au rendement du turboréacteur.

Le FR-A-2 102 187 concerne un mode de suspension d'un moteur du type à double flux et décrit les organes de suspension au pylône de l'avion. Ces organes sont situés dans des plans transversaux différents. L'un de ces organes composé de trois bielles s'oppose aux couples s'exerçant sur le moteur central. On prévoit également entre le capot du moteur et le carénage du ventilateur trois mécanismes d'espacement à deux bielles limitant le mouvement radial relatif entre le carénage et le capot et reprenant lors de l'utilisation d'un inverseur de poussée les moments qui s'exercent sur le carénage.

Ce dispositif ne fournit pas d'éléments suffisants pour éviter les inconvénients notés ci-dessus, ni permettre, comme c'est un des buts de l'invention, la liaison interne entre trois enveloppes concentriques d'un moteur par une liaison située dans un même plan transversal.

En effet, l'objet de l'invention est d'éliminer les causes de déformations notées ci-dessus et de permettre en conséquence de réduire le jeu radial entre stator et rotor. Il apporte aussi des facilités lors du montage de l'enveloppe du flux secondaire autour du carter d'échappement et en particulier dans l'application à un turboréacteur à triple flux, il permet une séparation entre le moteur central et deux enveloppes concentriques en compensant au montage l'empilement des défauts de construction et de montage des enveloppes, par exemple chaudronnées. Le dispositif de l'invention est caractérisé en ce que les premiers moyens d'attache de chaque bras comprennent d'une part une articulation de bras liant une section du bras à la première enveloppe du flux secondaire en laissant au bras une liberté de rotation dans ledit plan transversal et d'autre part une attache de longueur réglable orientée dans ce plan transversal et liée respectivement, d'une part, à la fois à la première enveloppe du flux secondaire et d'une seconde enveloppe extérieure à la première et fixée à la structure porteuse et d'autre part à une autre section du bras par deux articulations d'attache à liberté de rotation dans ce plan transversal et en ce que les deuxièmes moyens d'attache de chaque bras confèrent à celui-ci, relativement au carter d'échappement, une liberté de rotation dans ledit plan transversal et une liberté de translation dans une direction dudit plan passant par le voisinage de l'axe de la turbine, et laissant en outre au bras relativement au carter d'échappement, une liberté de rotation dans un plan parallèle à l'axe de la turbine.

L'invention permet ainsi lors du montage de l'enveloppe du flux secondaire autour de l'enveloppe du stator et du carter d'échappement, d'assigner une orientation optimale auxdits bras des organes de fixation.

On verra également plus loin comment l'invention pallie notamment les conséquences des dilatations différentielles apparaissant au cours du fonctionnement.

D'autres dispositions relatives notamment :

— à l'application de l'invention aux turboréacteurs à triple flux,

— à la réalisation technologique des premiers et des deuxièmes moyens de liaison de bras, seront exposés dans la description qui suit d'un exemple de réalisation, concernant l'application de l'invention à un turboréacteur à triple flux en référence aux dessins annexés dans lesquels :

la figure 1 est une section transversale d'un turboréacteur à triple flux équipé du dispositif de l'invention,

la figure 2 est une section axiale partielle dans le plan 2-2 de la figure 1,

la figure 3 est une vue à plus grande échelle des organes de suspension représentés dans la figure 1,

la figure 4 est une vue à plus grande échelle de l'un des organes de fixation représentés dans la figure 1,

la figure 5 est une vue de dessus de l'organe de fixation représenté dans la figure 4.

Ces figures ne montrent en principe que les éléments nécessaires à la compréhension des descriptions.

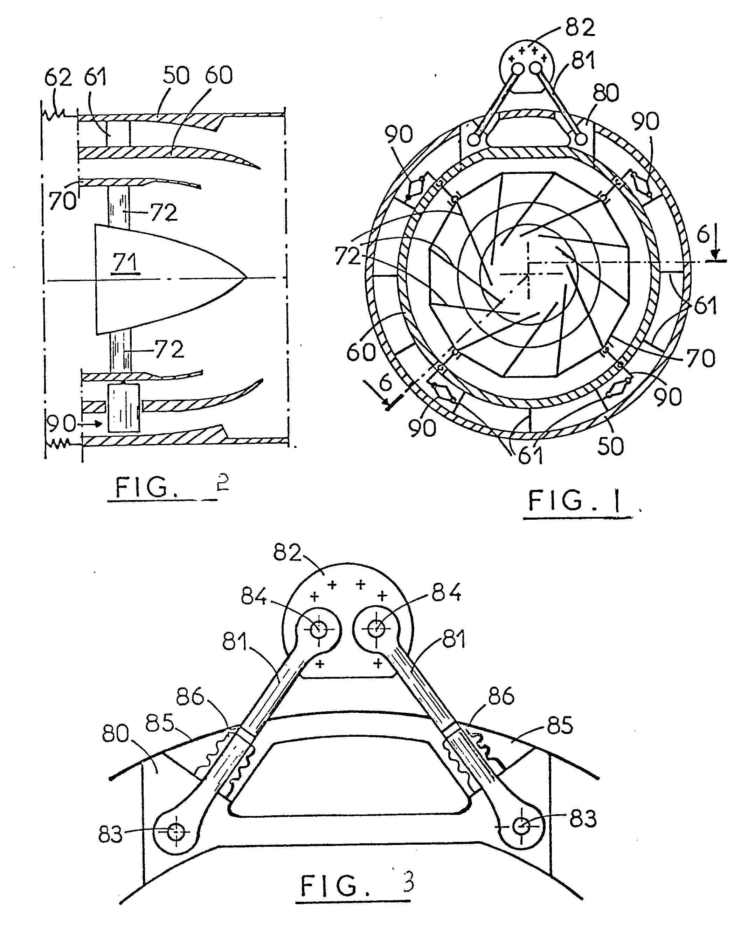

On considère d'abord simultanément les figures 1 et 2. Elles montrent un anneau rigide externe 50 qui constitue la partie arrière de l'enveloppe du flux tertiaire, un anneau rigide intermédiaire 60 qui constitue la partie arrière de l'enveloppe du flux secondaire et un anneau interne formé par le carter d'échappement 70 et qui entoure le cône 71 du support de palier arrière. Celui-ci est fixé à l'anneau 70 par une pluralité de bras rigides profilés 72. L'anneau 50 et l'anneau 60 sont liés rigidement, d'une part par le cadre arrière 80 suspendu par des biellettes 81 à un boîtier 82 (dont on ne voit que la bride avant) solidaire d'un mât-avion non représenté, d'autre part par une pluralité de bras radiaux 61. L'anneau externe 50 est relié au corps avant de l'enveloppe du flux tertiaire par une liaison étanche déformable constituée par un soufflet élastique 62. Les biellettes 81 et le boîtier 82 sont visibles seulement dans la figure 1 et non dans la figure 2.

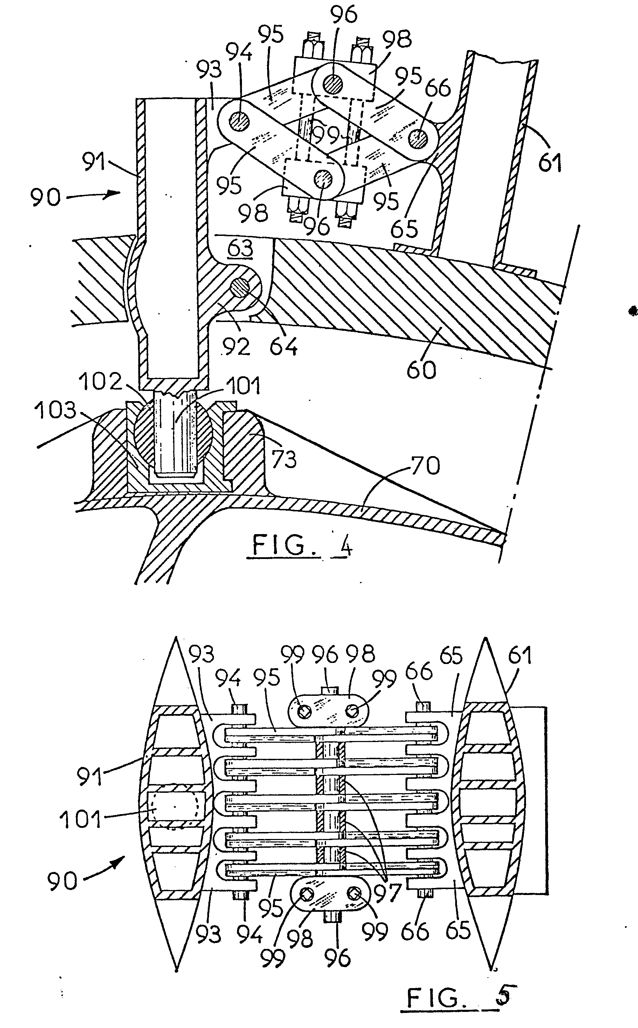

Conformément à l'invention, l'anneau 70 est suspendu dans l'anneau 60 par quatre organes de liaison 90 qui sont décrits plus loin en référence aux figures 4 et 5.

On considère maintenant la figure 3. Les chapes inférieures de biellettes 81 sont chacune liées au cadre 80 par un axe 83 tandis que les chapes supérieures sont chacune liées au boîtier 82 par un axe 84. Si le système était infiniment rigide, les deux bielles, la bride et le berceau formeraient un quadrilatère indéformable, du fait que la rotation autour de son axe de l'ensemble indéformable constitué par les anneaux 50 et 60 est rendue impossible par la liaison avant. Les déformations élastiques des structures liées par les bielles 81 permettent cependant de légers débattements de celles-ci à l'intérieur des passages de bielles 85 ménagés dans le cadre 80. Chaque corps de bielle 81 est entouré d'un soufflet cylindrique 86 qui joint ce corps à l'issue du passage correspondant afin d'assurer l'étanchéité de la veine tertiaire.

On considère enfin les figures 4 et 5 qui représentent schématiquement l'un des organes de fixation 90.

Le bras en caisson profilé 91 traverse un passage 63 ménagé dans l'anneau 60. Il est muni d'une chape 92 qui lui permet de pivoter autour d'un axe 64 logé dans le passage 63 et orienté parallèlement à l'axe de la turbine. Le bras 91 est donc doté d'une liberté de rotation dans un plan transversal à l'axe de la turbine.

Il porte à son extrémité externe (c'est-à-dire disposée dans le flux tertiaire), une pluralité de chapes 93 coaxiales traversées par un axe 94 parallèle à l'axe 64. Le bras fixe en caisson profilé 61 porte vers sa section médiane, en regard des chapes 93, une pluralité de chapes 65 traversées par un axe 66 lui aussi parallèle à l'axe 64.

Dans chacun des intervalles séparant deux chapes 93, l'axe 94 supporte par leurs extrémités une première paire de biellettes 95. Dans chacun des intervalles en vis-à-vis, l'axe 66 supporte par leurs extrémités une deuxième paire de biellettes 95. Une paire d'axes 96 lie respectivement une biellette d'une paire à une biellette de l'autre paire. Les axes 66 et 94 sont donc liés par une pluralité de parallélogrammes déformables identiques, chacun constitué par quatre biellettes 95. Des rondelles 97 disposées sur les axes 96 assurent l'entretoisage de ces parallélogrammes dont l'ensemble constitue un parallélogramme à dièdres déformables assurant la liaison d'un bras orientable 91 et d'un bras fixe 61. Les extrémités de chaque axe 96 débouchent de part et d'autre des biellettes 95 formant les bases de ce parallélogramme et portent chacune une jumelle 98. Les deux jumelles qui flanquent une même base sont entretoisées par deux boulons 99 parallèles entre eux qui sont disposés de part et d'autre des deux axes 96 correspondant et qui s'engagent dans des trous filetés ménagés dans ces jumelles. A chaque extrémité des boulons 99, les filetages sont inversés, de même que les filetages correspondants des jumelles 98. On peut donc régler au montage, par rotation de ces boulons 99, l'inclinaison des bras 91.

L'extrémité interne de chaque bras 91 (disposée dans le flux secondaire) porte un tourillon cylindrique 101 (représenté en pointillé dans la figure 5), qui s'engage à frottement doux dans l'alésage ménagé dans une rotule 102. Celle-ci s'insère dans un logement sphérique ménagé dans un coussinet 103 qui peut lui-même coulisser dans une glissière 73 solidaire de l'enveloppe 70 et orientée parallèlement à l'axe de la turbine.

Les différents organes situés dans un plan transversal à l'axe de la turbine et que l'on vient de décrire en référence aux figures 4 et 5, coopèrent donc pour régler et imposer à chaque bras profilé 91 une orientation donnée dans un plan parallèle à l'axe de la turbine et pour lui laisser, relativement au carter d'échappement 70, une liberté de position dans ledit plan, une liberté de translation radiale (c'est-à-dire dans une direction passant par l'axe de la turbine) et une liberté de translation axiale (c'est-à-dire dans une direction parallèle à cet axe).

Selon une variante de détail, l'extrémité 101 de chaque bras 91 peut être emmanchée à force dans la rotule 102 et la liberté de translation axiale du bras 91 relativement à l'enveloppe 70 est assurée par glissement du coussinet 103 qui est ainsi libre de coulisser dans les deux directions radiale et axiale dans la glissière 73.

Les valeurs convenables de raideur et d'inertie des liaisons assurées par les biellettes 95 sont obtenues en assignant à ces biellettes des dimensions déterminées pour assurer la reprise des charges, verticale, horizontale, ainsi que les couples passant dans ce plan. On peut remarquer que les différents parallélogrammes qu'elles constituent forment autant d'entretoises réglables ajustant la liaison entre les deux enveloppes constituant le stator.

On remarquera, pour terminer la présente description, que les solutions technologiques décrites en référence aux figures 4 et 5 sont intégralement applicables à des turboréacteurs à double flux.

**Revendications**

1. Dispositif de fixation, à une structure porteuse rigide (60) liée à un aéronef, du carter d'échappement (70) de la turbine d'un turboréacteur à au moins deux flux, à savoir un flux primaire central délimité par ce carter d'échappement (70) et un flux secondaire délimité par une première enveloppe (60) qui entoure ce carter (70) et qui est fixée à cette structure porteuse (80) du genre comprenant une pluralité d'organes de liaison (90) répartis autour du carter d'échappement (70) et comprenant chacun un bras (91) orienté transversalement à l'axe du rotor de la turbine, des premiers moyens d'attache du bras à la première enveloppe du flux secondaire ainsi que des deuxièmes moyens d'attache du bras (91) au carter d'échappement (70), caractérisé en ce que les premiers moyens d'attache de chaque bras (91) comprennent d'une part une articulation (64 et 92) de bras liant une section de bras (91) à la première enveloppe (60) du flux secondaire en laissant au bras (91) une liberté de rotation dans ledit plan transversal et d'autre part une attache (94 à 99) de longueur réglable orientée dans ce plan transversal et liée respectivement d'une part, à la fois à la première enveloppe (60) du flux secondaire et à une seconde enveloppe (50) extérieure à la première et fixée à la structure porteuse (80) et d'autre part à une autre section du bras (91) par une première (65 et 66) et une deuxième articulation (93 et 94) d'attache à liberté de rotation dans ce plan transversal et en ce que les deuxièmes moyens d'attache de chaque organe de fixation (90) laissent au bras (91), relativement au carter d'échappement (70), une liberté de rotation dans ledit plan transversal et une liberté de translation dans une direction dudit plan passant au voisinage de l'axe du rotor de la turbine et laissent en outre au bras (91), relativement au carter d'échappement (70), une liberté de rotation dans un plan parallèle à l'axe de la turbine.

2. Dispositif de fixation selon la revendication 1, caractérisé en ce que l'attache (94 à 99) de chaque organe de liaison (90) est constituée par un arrangement parallélépipédique d'un empilement de parallélogrammes déformables formés chacun de quatre biellettes (95) de longueur égale articulées deux à deux par leurs extrémités autour de quatre axes d'articulation (66, 94, 96) communs à tous les parallélogrammes et déterminant respectivement les quatre arêtes des dièdres du parallélépipède, l'un de ces axes (66) étant lié à la première enveloppe (60) du flux secondaire et à la seconde enveloppe (50) par un bras (61) et l'axe opposé (94) étant lié au bras (91) de l'organe de liaison (90), les moyens de réglage de la valeur des dièdres de l'arrangement constituant l'attache (94 à 99) comprenant au moins un boulon (99) accouplant deux biellettes (95) consécutives d'au moins l'un des parallélogrammes.

3. Dispositif de fixation selon la revendication 1 ou la revendication 2, caractérisé en ce que lesdits deuxièmes moyens d'attache comprennent une rotule (102) en bout du bras (91) et un coussinet logeant la rotule (102) et coulissant dans une glissière (73) fixée au carter d'échappement (70).

4. Dispositif de fixation selon l'une quelconque des revendications 1 à 3, caractérisé en ce que, le turboréacteur étant un turboréacteur à triple flux dont l'enveloppe du flux secondaire et l'enveloppe du flux tertiaire comportent chacune un anneau rigide (60, 50), les deux anneaux (50, 60) étant tous deux fixés à la structure porteuse (80) et entretoisés par des bras fixes (61), l'articulation (64 à 92) de bras des premiers moyens d'attache du bras (91) est liée directement à l'anneau (60) de l'enveloppe du flux secondaire et la première articulation (65 et 66) d'attache (94 à 99) est liée à l'un des bras fixes (61).

**Claims**

1. Mounting device, to a rigid support structure (60) connected to an airframe, for the exhaust casing (70) of the turbine of a turbo-jet engine with at least two flows, namely a primary central flow defined by the exhaust casing (70) and a secondary flow defined by a first envelope (60) which surrounds the casing (70) and which is secured to the support structure (80) of the kind comprising a plurality of connecting members (90) distributed around the exhaust casing (70) and each comprising an arm (91) orientated transversely to the axis of the rotor of the turbine, first attachment means of the arms to the first envelope of the secondary flow as well as secondary attachment means of the arms (91) to the exhaust casing (70), characterised in this that the first attachment means of each arm (91) comprise on the one hand a pivot (64 and 92) of the arm connecting a section of the arm (91) to the first, secondary flow, envelope (60) whilst giving to the arm (91) freedom to rotate in the said transverse plane and on the other hand an attachment (94 to 99) of controllable length orientated within this transverse plane and respectively connected on the one hand both to the first envelope (60) of the secondary flow and to a second envelope (50) external to the first and secured to the support structure (80) and on the other hand to another section of the arm (91) by a first (65 and 66) and a second attachment pivot (93 and 94) with freedom for rotation in the transverse plane and in this that the second attachment means of each securing member (90) provides the arm (91), relatively to the exhaust casing (70), a freedom for rotation in the said transverse plane and a freedom for translational movement in a direction of the said plane passing adjacent the axis of the rotor of the turbine and providing furthermore for the arm (91), relatively to the exhaust casing (70), a freedom for rotation in a plane parallel to the axis of the turbine.

2. Mounting device according to claim 1 characterised in this that the attachment (94-99) of each connecting member (90) is constituted by a parallelepiped arrangement of stack of deformable parallelograms each formed by four rods (95) of equal length pivoted two by two by their ends about four pivotal axes (66, 94, 96) common to all the parallelograms and respectively determining the four pivots of the diagonal of the parallelepiped, one of these axes (66) being connected to the first envelope (60) of the secondary flow and the second envelope (50) by an arm (61) and the opposite axis (94) being connected to the arm (91) of the connecting member (90), control means for the value of the diagonal of the arrangement constituting the attachment (94 to 99) comprising at least one pin (99) coupling two consecutive rods (95) of at least one of the parallelograms.

3. Mounting device according to claim 1 or claim 2, characterised in this that the said second attachment means comprise a ball joint (102) at the end of the arm (91) and a bearing pad engaging the ball joint (102) and sliding in a slide member (73) secured to the exhaust casing (70).

4. Mounting device according to any one of claims 1 to 3 characterised in this that, the turbojet engine being a triple-flow turbo-jet engine of which the envelope of the secondary flow and the envelope of the tertiary flow each comprise a rigid ring (60, 50), the two rings (50, 60) being both secured to the support structure (80) and crosspieces by the fixed arms (61), the pivot (64 and 92) of the arm of the first attachment means of the arm (91) is directly connected to the ring (60) of the secondary flow envelope and the first pivot (65, 66) for attachment (94 to 99) is connected to one of the fixed arms (61).

## Ansprüche

1. Mit einem an einem Luftfahrzeug angebrachten starren Tragwerk (80) versehene Vorrichtung zur Aufhängung des Austrittsgehäuses (70) der Turbine eines Mehrkreisstrahltriebwerks mit mindestens zwei Kreisen, nämlich einem durch das Austrittsgehäuse (70) begrenzten zentralen Primärkreis und einem Sekundärkreis, der durch einen ersten Mantel (60) begrenzt ist, welcher das Gehäuse (70) umgibt und an dem Tragwerk (80) befestigt ist, mit einer Anzahl Verbindungsorgane (90), die um das Austrittsgehäuse (70) herum verteilt sind und die jeweils einen Arm (91) aufweisen, der sich quer zur Achse des Turbinenrotors erstreckt, ferner mit ersten Mitteln zum Befestigen des Arms an dem ersten Mantel des Sekundärkreises und mit zweiten Mitteln zum Befestigen des Armes (91) an dem Austrittsgehäuse (70), dadurch gekennzeichnet, daß die ersten Mittel zum Befestigen der einzelnen Arme (91) einerseits aus einem Armgelenk (64 und 92) bestehen, das einen Abschnitt des Armes (91) mit dem ersten Mantel (60) des Sekundärkreises verbindet, wobei der Arm (91) die Möglichkeit zur Drehung in der erwähnten Querebene hat, und andererseits aus einer in der erwähnten Querebene sich erstreckenden Befestigung (94 bis 99) einstellbarer Länge, welche Befestigung einerseits sowohl mit dem ersten Mantel (60) des Sekundärkreises als auch mit einem zweiten, außerhalb des ersten angeordneten und an dem Tragwerk (80) befestigten zweiten Mantel (50) und andererseits mit einem anderen Abschnitt des Armes (91) durch ein erstes (65 und 66) und ein zweites Befestigungsgelenk (93 und 94) verbunden ist, welche Gelenke die Möglichkeit zur Drehung in der erwähnten Querebene bieten, und daß die zweiten Mittel zum Befestigen jedes Verbindungsorgans (90) dem Arm (91) relativ zu dem Austrittsgehäuse (70) eine Möglichkeit zur Drehung in der genannten Querebene und eine Translationsmöglichkeit in der genannten Ebene in einer Richtung geben, die nahe der Achse des Turbinenrotors verläuft, und daß sie außerdem dem Arm (91) eine Möglichkeit zur Drehung relativ zu dem Austrittsgehäuse (70) in einer parallel zu der Turbinenachse verlaufenden Ebene geben.

2. Aufhängungsvorrichtung nach Anspruch 1, dadurch gekennzeichnet, daß die Befestigung (94 bis 99) jedes Verbindungsorgans (90) aus einem in Form eines Parallelepipeds gebildeten Stapel von verformbaren Parallelogrammen besteht, die jeweils aus vier gleichlangen Schwingarmen (95) bestehen, welche paarweise mit ihren Enden um vier Gelenkbolzen (66, 94, 96) schwenkbar sind, die allen Parallelogrammen gemeinsam sind und die jeweils eine der vier Ecken der Winkel des Parallelepipeds bilden, daß der eine Bolzen (66) mit dem ersten Mantel (60) des Sekundärkreises und mit dem zweiten Mantel durch einen Arm (61) verbunden ist und daß der gegenüberliegende Bolzen (94) mit dem Arm (91) des Verbindungsorgans (90) verbunden ist, wobei die Einstelleinrichtung für die Größe der Winkel in der die Befestigung (94 bis 99) bildenden Anordnung mindestens einen Bolzen (99) aufweist, der zwei aufeinanderfolgende Schwingarme (95) mindestens eines der Parallelogramme koppelt.

3. Aufhängungsvorrichtung nach Anspruch 1 oder 2, dadurch gekennzeichnet, daß die genannten zweiten Befestigungsmittel einen Kugelkopf (102) am Ende des Armes (91) und eine Kugelpfanne umfassen, die den Kugelkopf (102) aufnimmt und sich in einer Führung (73) verschieben läßt, die an dem Austrittsgehäuse (70) befestigt ist.

4. Aufhängungsvorrichtung nach einem der Ansprüche 1 bis 3, dadurch gekennzeichnet, daß es sich bei dem Turbotriebwerk um ein Dreikreis-Triebwerk handelt, bei dem der Mantel des Sekundärkreises und der Mantel des dritten Kreises jeweils einen starren Ring (60, 50) aufweisen, die beide an dem Tragwerk (80) befestigt und durch feststehende Arme (61) verstrebt sind, und daß das Armgelenk (64 und 92) der ersten Befestigungsmittel des Armes (91) unmittelbar mit dem Ring (60) des Mantels des zweiten Kreises verbunden ist und das erste Gelenk (65 und 66) der Befestigung (94 bis 99) mit einem feststehenden Arm (61) verbunden ist.

0 028 970

62  61      50   60

FIG. 2

82
81
80
90        90
72
6
61
60
6
70
90
90
61    50

FIG. 1

82
84        84
81        81
86        86
80  85        85
83        83

FIG. 3

1

FIG. 4

FIG. 5